# FASCICULE DE BREVET EUROPEEN

(11) **EP 3 153 672 B1**
(45) Date de publication et mention de la délivrance du brevet: **18.07.2018**
(21) Numéro de dépôt: 16192048.3
(22) Date de dépôt: 03.10.2016
(51) Int. Cl.: F01D 25/02, F02C 7/047

(54) **BEC ANTIGIVRE DE COMPRESSEUR BASSE PRESSION DE TURBOMACHINE AXIALE**
ANTI-VEREISUNGS-EINTRITTSLIPPE EINES NIEDERDRUCK-VERDICHTERS EINES AXIALEN TURBOTRIEBWERKS
DE-ICING INLET NOSE FOR LOW-PRESSURE COMPRESSOR OF AN AXIAL TURBINE ENGINE

(30) Priorité: 07.10.2015 BE 201505640
(43) Date de publication de la demande: 12.04.2017
(73) Titulaire: Safran Aero Boosters SA, 4041 Herstal (BE)
(72) Inventeur: BOUILLON, David, 1200 Woluwe-Saint-Lambert (BE); HERBAUT, Ghislain, 4257 Berloz (BE)
(74) Mandataire: Lecomte & Partners

(56) Documents cités:
- EP-A2- 1 405 986
- US-A- 5 925 275
- US-A1- 2014 014 640

## Description

### Domaine technique

L'invention se rapporte au domaine des becs de séparation en entrée de compresseur de turbomachine. Plus précisément, l'invention concerne un bec anti givre en entrée de compresseur de turbomachine. L'invention a également trait à un compresseur, et à une turbomachine axiale ; notamment un turboréacteur d'avion ou un turbopropulseur d'aéronef.

### Technique antérieure

L'entrée d'un compresseur basse pression d'un turboréacteur est généralement délimitée par un bec de séparation circulaire. Placé à l'intérieur et en aval de la lèvre de séparation de la nacelle, le bec de séparation partage un flux entrant dans la turbomachine en un flux primaire et en un flux secondaire. La répartition de ces flux emmanchés dépend du diamètre et de la géométrie du bord d'attaque.

En fonctionnement, le bec de séparation est sujet au givrage. Il s'y forme une plaque de glace par accumulation de givre qui modifie la géométrie du bord d'attaque. Dès lors, l'écoulement vers la veine primaire est perturbé. De plus, le givre peut se développer en formant çà et là de véritables blocs de glace. En raison des fortes vibrations du turboréacteur, ces blocs de glace finissent par se détacher et sont inévitablement aspirés dans le compresseur. Ils y endommagent les aubes, ce qui diminue les performances de la turbomachine et risque de provoquer une panne.

Afin de se prémunir de ces effets, un dispositif chauffant équipe couramment le bec de séparation. Il le réchauffe de manière à s'opposer à la formation de glace ou pour faire fondre de la glace déjà formée. La chaleur peut être apportée par de l'huile de la turbomachine, ou produite électriquement.

Le document US 2004/0065092 A1 divulgue un compresseur basse pression de turbomachine. Le compresseur présente un bec de séparation dont la surface externe est tapissée d'un dispositif dégivrant. Le dispositif montre une couche polymère dans laquelle est noyée une bobine de fil chauffant. Lors de l'alimentation électrique de ce dernier, il chauffe à la manière d'une résistance électrique. Cela permet de combattre le givre sur le bord d'attaque. Toutefois, cette technologie est encombrante ; elle pénalise le besoin de finesse du bord d'attaque pour un partage précis des flux. Par ailleurs, la position des spires dans l'épaisseur de la couche polymère est aléatoire. En fonctionnement, certaines zones de la surface externe ne sont pas suffisamment réchauffées, tandis que d'autres le sont trop. Le document US 2014/0014640 A1 divulgue une entrée anti givre de nacelle.

### Résumé de l'invention

### Problème technique

L'invention a pour objectif de résoudre au moins un des problèmes posés par l'art antérieur. Plus précisément, l'invention a pour objectif d'améliorer la compacité d'un bec de séparation dégivrant d'un compresseur de turbomachine. L'invention a également pour objectif de proposer une solution simple, résistante, légère, économique, fiable, facile à produire, et améliorant le rendement.

### Solution technique

L'invention a pour objet un bec de séparation de compresseur de turbomachine axiale selon la revendication 1.

Selon un mode avantageux de l'invention, le ou chaque ruban traverse radialement le bord d'attaque circulaire.

Selon un mode avantageux de l'invention, le bec de séparation comprend une zone annulaire chauffée dans laquelle est inscrite le ou chaque ruban, le ou les rubans occupant au moins 10%, préférentiellement au moins 25%, plus préférentiellement la majorité de la zone chauffée.

Selon un mode avantageux de l'invention, le ou chaque ruban effectue des demi-tours, préférentiellement au moins cinq demi-tours, plus préférentiellement au moins dix demi-tours.

Selon un mode avantageux de l'invention, l'élément comprend plusieurs rubans et deux connecteurs chacun relié à auxdits rubans, dont un connecteur interne disposé radialement à l'intérieur du bord d'attaque et un connecteur externe disposé radialement à l'extérieur du bord d'attaque.

Selon un mode avantageux de l'invention, le dispositif anti givre et/ou l'élément chauffant comprend/comprennent plusieurs rubans parallèles et/ou se longeant les uns les autres.

De plus, le bec de séparation comprend un crochet annulaire, notamment pour la fixation d'une virole externe ; l'élément chauffant, préférentiellement le ou chaque ruban, chevauchant axialement le crochet annulaire.

Selon un mode avantageux de l'invention, le bec de séparation comprend une couche de matériau diélectrique avec deux strates de matériaux diélectriques, le ou chaque ruban étant disposé à l'interface entre lesdites strates.

Selon un mode avantageux de l'invention, les strates comprennent une strate aval et une strate amont dont la conductivité thermique est supérieure à celle de la strate aval ; le ou chaque ruban étant inscrit dans l'épaisseur de la strate amont.

Selon un mode avantageux de l'invention, le ou l'ensemble des rubans coupe radialement la majorité de la circonférence du bord d'attaque.

Selon un mode avantageux de l'invention, le bec de séparation comprend une cavité annulaire et une cloison annulaire séparant la cavité annulaire des flux annulaires, préférentiellement l'élément chauffant, notamment le ou chaque ruban, est à l'interface entre la cavité et la cloison annulaire.

Selon un mode avantageux de l'invention, le bec de séparation comprend une cloison annulaire avec une portion d'épaisseur variable formant un corps annulaire, le corps présentant préférentiellement une épaisseur maximale au niveau du bord d'attaque, et recevant éventuellement le crochet annulaire.

Selon un mode avantageux de l'invention, le corps annulaire comporte une marche annulaire externe délimitant axialement l'élément chauffant et éventuellement la couche diélectrique.

Selon un mode avantageux de l'invention, le bec de séparation comprend un matériau composite à matrice organique, formant notamment la cloison.

Selon un mode avantageux de l'invention, l'élément chauffant comprend plusieurs rubans chauffants électriques adaptés pour s'opposer à la présence de givre sur la surface annulaire.

Selon un mode avantageux de l'invention, le ou chaque élément chauffant est monobloc, préférentiellement ses rubans sont venus de matière.

Selon un mode avantageux de l'invention, le ou chaque ruban forme sur l'élément chauffant une zone de moindre épaisseur et/ou une zone de moindre largeur, et/ou une zone de moindre section, notamment pour augmenter la résistance électrique linéique.

Selon un mode avantageux de l'invention, l'écart entre deux portions voisines de ruban est inférieur ou égal à 1,00 mm, préférentiellement inférieur ou égal à 0,50 mm.

Selon un mode avantageux de l'invention, la zone annulaire chauffée est délimitée radialement et/ou axialement par le ou chaque ruban, ladite zone étant éventuellement libre de ruban à au moins 10% ou 25%.

Selon un mode avantageux de l'invention, le dispositif comprend plusieurs éléments chauffants, préférentiellement branchés en parallèles.

Selon un mode avantageux de l'invention, le corps annulaire est généralement plein, ledit corps étant recouvert par le ou chaque ruban et/ou par la couche diélectrique ; éventuellement sur toute sa hauteur radiale.

Selon un mode avantageux de l'invention, le ou chaque ruban présente deux faces opposées, chaque strate recouvrant l'une des deux faces opposées.

Selon un mode avantageux de l'invention, le ou chaque ruban comprend des branches principales qui sont parallèles à l'axe de symétrie du bec de séparation.

Selon un mode avantageux de l'invention, le ou chaque ruban est plus mince que large, préférentiellement au moins cinq ou dix ou vingt fois.

Selon un mode avantageux de l'invention, le ou chaque ruban est plus mince que chaque strate, préférentiellement au moins deux ou dix fois.

Selon un mode avantageux de l'invention, le ou chaque ruban chauffant électrique comprend une face principale épousant la surface annulaire de séparation.

Selon un mode avantageux de l'invention, chaque connecteur est plus large que chaque ruban, préférentiellement au moins trois fois ; et éventuellement plus épais.

L'invention a également pour objet un compresseur de turbomachine axiale, notamment basse pression, comprenant un bec de séparation, remarquable en ce que le bec de séparation est conforme à l'invention. De plus, le compresseur comprend une virole externe et une rangée annulaire d'aubes statoriques s'étendant radialement depuis la virole externe, ladite virole étant fixée au bec de séparation, notamment via son crochet annulaire.

L'invention a également pour objet une turbomachine, comprenant un bec de séparation, remarquable en ce que le bec de séparation est conforme à l'invention, et la turbomachine comprend un compresseur avec un bec de séparation, le compresseur étant éventuellement conforme à l'invention.

Selon un mode avantageux de l'invention, la turbomachine comprend une source électrique apte à produire du courant électrique et qui alimente électriquement le ou chaque ruban.

De manière générale, les modes avantageux de chaque objet de l'invention sont également applicables aux autres objets de l'invention. Dans la mesure du possible, chaque objet de l'invention est combinable aux autres objets.

### Avantages apportés

L'invention adopte des rubans afin de recouvrir le bec de séparation sans augmenter significativement son épaisseur, ni son rayon de courbure au niveau du bord d'attaque. Une telle forme permet de conserver la légèreté du bec, et se plie à l'application sur le bord d'attaque du compresseur malgré le faible rayon en amont. La finesse des rubans permet de réduire la température de dégivrage, ce qui simplifie la réalisation d'un bec de séparation composite à matrice organique.

La couche diélectrique comporte au moins deux strates. Cette disposition permet de fournir une couche support, celle en contact du corps, afin de mieux gérer l'écartement entre les rubans et le corps ; ainsi que la distance entre ces mêmes rubans et la surface de séparation. Ainsi, l'effet dégivrant est plus homogène et donc mieux maîtrisé, malgré la taille et la finesse d'un bec de séparation d'un compresseur.

### Brève description des dessins

La figure 1 représente une turbomachine axiale selon l'invention.
La figure 2 est un schéma d'un compresseur de turbomachine selon l'invention.
La figure 3 illustre un bec de séparation selon un premier mode de réalisation de l'invention.
La figure 4 montre un dispositif de dégivrage en coupe selon l'axe 4-4 tracé sur la figure 3 suivant le premier mode de réalisation de l'invention.
La figure 5 montre un dispositif de dégivrage en coupe suivant un deuxième mode de réalisation de l'invention.
La figure 6 présente un élément chauffant selon l'invention.

### Description des modes de réalisation

Dans la description qui va suivre, les termes interne et externe renvoient à un positionnement par rapport à l'axe de rotation d'une turbomachine. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. Il est entendu dans la présente invention que l'aspect anti givre convient tant à s'opposer à une accumulation de givre, qu'à faire fondre du givre déjà accumulé.

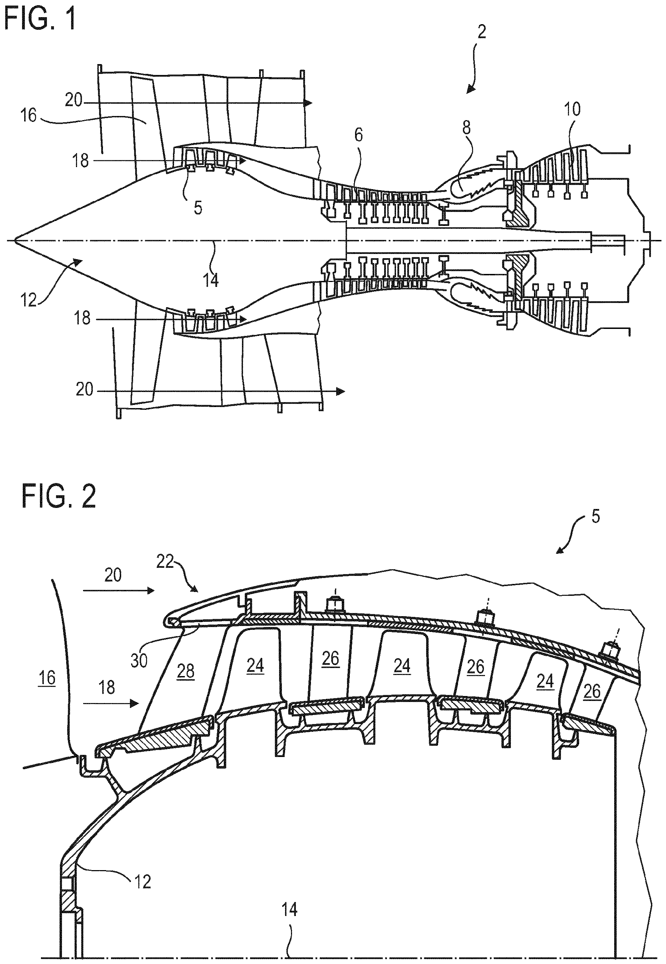

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 5, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 5 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires radialement concentriques. Ils sont canalisés par le carter de la turbomachine et/ou des viroles.

La figure 2 est une vue en coupe d'un compresseur d'une turbomachine axiale telle que celle de la figure 1. Le compresseur peut être le compresseur basse-pression 5. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 5 comprend plusieurs redresseurs, en l'occurrence quatre, qui contiennent chacun une rangée annulaire d'aubes statoriques (26 ; 28). Les redresseurs sont associés au fan 16 ou à une rangée d'aubes rotoriques pour redresser le flux d'air, de sorte à convertir la vitesse du flux en pression statique. Les aubes 28 associées au fan 16 forment la rangée en entrée de compresseur, elles sont communément appelée Inlet Guide Vanes (IGV). Ces aubes 28 sont supportées par une virole externe 30 d'où elles s'étendent radialement vers l'intérieur.

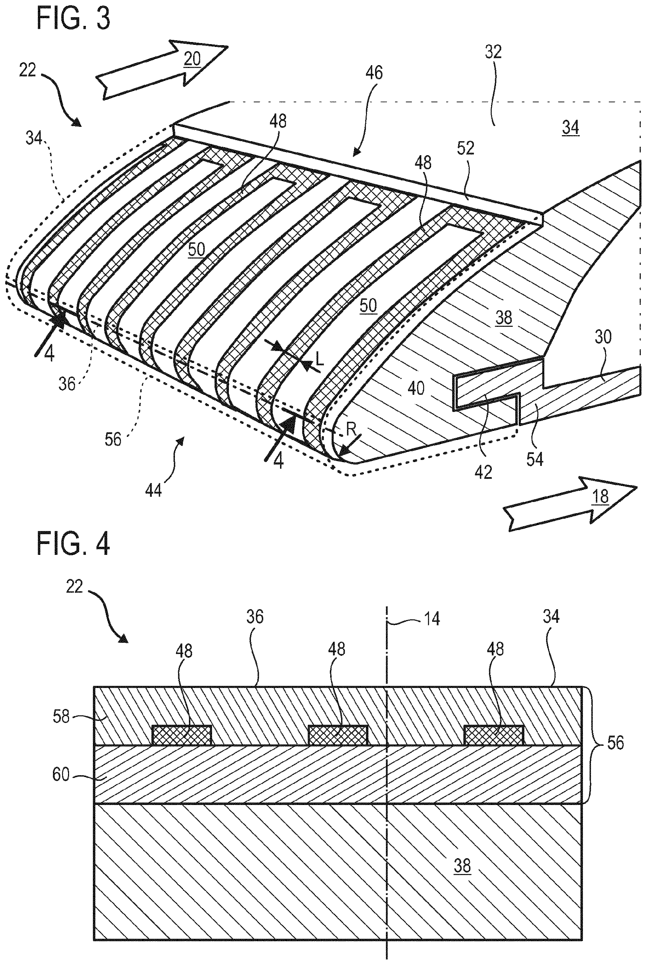

La figure 3 esquisse une coupe d'une portion amont du bec de séparation 22. Il y est représenté une virole externe 30 qui est fixée au bec de séparation 22.

Le bec de séparation 22 comporte une paroi annulaire 32 formant une surface annulaire de séparation 34 avec un bord d'attaque 36 circulaire en extrémité amont. Cette surface 34 permet de partager un flux entrant dans la turbomachine en un flux primaire 18 et en un flux secondaire 20 à partir du bord d'attaque 36. Au niveau du bord d'attaque 36, le profil de révolution du bec de séparation 22 présente un rayon de courbure R inférieur ou égal à 10 mm, préférentiellement inférieur ou égal à 5,00 mm. Le bec de séparation 22 peut montrer un corps annulaire 38 formant un bloc circulaire de matière. Il peut former une surépaisseur sur la paroi annulaire 32. La paroi 32, et notamment le corps 38 peuvent être réalisés en un matériau composite à matrice organique afin d'alléger le bec de séparation 22. Le matériau composite peut comprendre un renfort fibreux sous la forme d'une préforme, ou sous la forme de fibres réparties dans le volume du composite. On entend par matériau composite un matériau formé de plusieurs composants élémentaires dont l'association confère à l'ensemble des propriétés qu'aucun des composants pris séparément ne possède.

La virole 30 est liée au bec de séparation 22 grâce à une fixation circulaire de crochet annulaire 40. Le bec de séparation 22 présente à cet effet une gorge annulaire ouverte vers l'aval, alors que la virole externe 30 présente une portée tubulaire 42 engagée dans ladite gorge. Le crochet annulaire 40 peut être formé dans le corps annulaire 38.

Afin de combattre le givre, que ce soit en évitant sa formation ou en le fondant, le bec de séparation 22 est muni d'un dispositif chauffant 44 anti givre. Il est alimenté en courant électrique fourni par la turbomachine, via une batterie et/ou un générateur (non représentés). Le dispositif 44 comprend au moins un élément chauffant électrique 46, préférentiellement plusieurs éléments chauffants électriques 46 répartis tout autour du bec de séparation 22, et éventuellement disposés au niveau du bord d'attaque 36. Cette implantation favorise une lutte contre le givre à cet endroit, et évite une propagation du dépôt de givre en direction des aubes en aval.

Chaque élément chauffant électrique 46 comprend au moins un ruban chauffant électrique 48, préférentiellement plusieurs rubans chauffants électriques 48. Les rubans 48 sont des conducteurs électriques, par exemple en métal tel du cuivre ou de l'aluminium. Ils peuvent être en nichrome, un alliage comprenant du nickel et du chrome. Ou encore, ils peuvent être réalisés en graphite, ou en carbone. Les rubans 48 forment des résistances électriques chauffantes dissipant de la puissance électrique par effet Joule. La résistance électrique du matériau formant les rubans 48 est inférieure ou égale à 50*10(^-5) Ω*m, préférentiellement inférieure ou égale à 80*10(^-9) Ω*m.

Les rubans 48 comprennent des branches généralement parallèles et traversent le bord d'attaque 36. Les branches peuvent être des branches axiales. Les rubans 48 décrivent des créneaux ou des serpentins à cheval sur le bord d'attaque 36 afin de réchauffer la surface de séparation 34 vers l'intérieur et vers l'extérieur depuis le bord d'attaque 36. Les rubans 48 effectuent plusieurs demi-tours, à la fois selon la circonférence et axialement. Les rubans 48 occupent une zone annulaire chauffée 50 où le dispositif anti givre 44 s'oppose à la présence de givre ou de glace, en l'empêchant de se former ou en la faisant fondre. La zone chauffée 50 présente un profil arqué, elle s'étend depuis de bord d'attaque 36 vers l'intérieur et vers l'extérieur. Chacun de ses bords est délimité par les sommets des rubans 48. La zone 50 peut être délimitée par une marche circulaire 52 à l'extérieur ; et par une cornière annulaire 54 de la virole externe 30 ou une surface interne de la virole externe 30 en contact du flux primaire 18. Les rubans 48 occupent entre 10% et 90%, préférentiellement entre 30% et 45% de ladite zone 50, ce qui permet d'optimiser la couverture.

L'élément chauffant 46 est intégré dans une couche de matériau diélectrique 56 (représentée en traits pointillés) ; qui isole électriquement l'élément chauffant 46 du corps 38 du bec de séparation 22. L'élément chauffant 46 est noyé dans la couche 56, ce qui permet de recouvrir chaque face des rubans 48. Ces derniers sont donc isolés électriquement du corps 38, et protégés de l'érosion engendrée par les flux. La couche diélectrique 56 forme la surface de séparation 34 au niveau du bord d'attaque 36, elle se prolonge à l'intérieur vers la virole externe 30 et à l'extérieur dans le flux secondaire 20; éventuellement en direction de panneaux acoustiques ou d'échangeurs de chaleur (non représentés). Bien entendu, la paroi peut elle-même être réalisée en un matériau diélectrique, ce qui rend la couche diélectrique facultative.

Les rubans 48 sont essentiellement fins, par exemple d'épaisseur inférieure ou égale à 0,5 mm, préférentiellement inférieure ou égale à 0,1 mm. Leur largeur L est inférieure ou égale à 10 mm, préférentiellement inférieure ou égale à 4 mm. Leur largeur est sensiblement égale au rayon de courbure R du profil de révolution du bec de séparation sur le bord d'attaque. Le rapport R/L est compris dans l'intervalle [0,5 ; 2], préférentiellement compris dans l'intervalle [0,8 ; 1,30], les bornes étant incluses. La largueur des rubans 48 est inférieure ou égale à l'écartement circonférentiel entre les rubans 48.

La figure 4 représente une portion de bec de séparation 22 selon un premier mode de réalisation de l'invention. La portion correspond à une coupe selon l'axe 4-4 tracé sur la figure 3, cet axe pouvant correspondre au bord d'attaque 36. L'axe de rotation 14 est tracé en guise de repère.

La couche diélectrique 56 est disposée en amont du corps 38 tout comme les rubans 48, ce qui permet un chauffage au plus près du bord d'attaque 36. La couche diélectrique 56 peut comprendre au moins deux strates diélectriques (58 ; 60), et éventuellement davantage. Ces strates (58 ; 60) sont superposées et forment un laminé tapissant la face amont du corps 38. Les rubans 48 sont disposés à l'interface des strates (58 ; 60). La strate amont 58 recouvre les rubans 48, ces derniers étant inscrits dans l'épaisseur de cette strate 58. Les rubans 48 sont généralement lisses. Ils épousent la surface du corps 38. Les profils des rubans 48 sont généralement d'épaisseurs et de largeurs constantes.

La couche 56 peut comprendre du polychlorure de vinyle (PVC), du polypropylène, du téflon, de la bakélite, de l'époxy, et/ou du Kapton qui est un film de polyimide. Par exemple la strate amont 58 peut comprendre de la bakélite et/ou du polypropylène. Sa conductivité thermique peut être supérieure ou égale à 0,40 W/(m*K), préférentiellement supérieure ou égale à 1,00 W/(m*K). La strate aval 60 peut comprendre de l'époxy et/ou polychlorure de vinyle (PVC) et/ou du Kapton. Sa conductivité thermique peut être inférieure ou égale à 0,25 W/(m*K), préférentiellement inférieure ou égale à 0,17 W/(m*K), plus préférentiellement inférieure ou égale à 0,12 W/(m*K). La conductivité thermique de la strate amont 58 est supérieure à la conductivité thermique de la strate aval 60, préférentiellement au moins 50% supérieure, plus préférentiellement au moins deux fois supérieure. La strate amont 58 peut être recouverte d'un film externe (non représenté) la protégeant contre l'érosion.

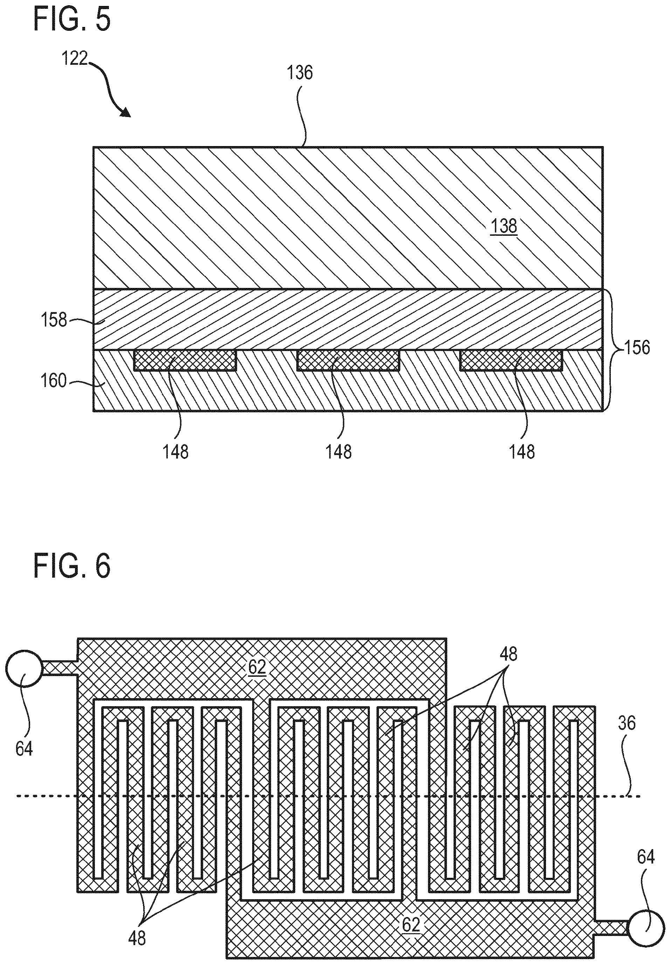

La figure 5 représente une portion de bec de séparation 122 selon un deuxième mode de réalisation de l'invention. Cette figure 5 reprend la numérotation des figures précédentes pour les éléments identiques ou similaires, la numération étant toutefois incrémentée de 100. La portion peut correspondre à une coupe selon l'axe 4-4 tracé sur la figure 3, cet axe pouvant correspondre au bord d'attaque.

Les matériaux employés pour la couche 156 et ses strates (158 ; 160) et les rubans 148 peuvent être identiques à ceux évoqués précédemment. De même, les géométries peuvent être identiques à celles décrites ci-avant. Ici, la couche diélectrique 156 et les rubans 148 sont disposés en aval du corps 138 ; soit à l'opposé du bord d'attaque 136. A cet endroit, ils sont protégés mécaniquement contre l'érosion.

Les rubans 148 réchauffent le bord d'attaque 136 par conduction thermique au travers de la strate amont 158 et au travers du corps 138. La conduction thermique de la strate amont 158 sera supérieure à celle ce la strate aval 160 pour privilégier une dissipation thermique, et donc un réchauffement vers l'amont.

La figure 6 représente un élément chauffant 46 à plat. La position fictive du bord d'attaque 36 est tracée à l'aide d'un trait pointillé. Cet élément chauffant 46 peut être employé dans le premier mode de réalisation comme dans le deuxième mode de réalisation de l'invention. L'axe de rotation 14 est tracé à titre indicatif.

L'élément chauffant 46 présente plusieurs jeux de rubans 48, en l'occurrence trois jeux, mais tout autre nombre reste envisageable. Il forme un circuit électrique avec des pistes chauffantes matérialisées par les rubans 48. Les rubans 48 sont connectés en parallèles. Deux à deux, leurs branches axiales forment des créneaux grâce à leur jonction. Chaque ruban 48 forme six créneaux, trois en amont et trois en aval. Les rubans 48 forment des serpentins plans, ou une sinusoïde, ce qui permet de balayer une plus grande étendue.

L'élément chauffant 46 comprend deux connecteurs 62 en formes de bandes. Les connecteurs sont joints électriquement à chaque ruban 48 qu'ils bordent. La résistance électrique linéique de chaque connecteur 62 peut être inférieure à celle des rubans 48 afin de concentrer l'échauffement par effet joule au niveau des rubans 48. L'élément chauffant 46 comporte en outre des bornes électriques 64, chacune associée à l'un des connecteurs. Lorsque le bec de séparation comporte plusieurs éléments chauffants 46, il est possible de les brancher en parallèle grâce à leurs bornes électriques 64. Chaque élément chauffant 46 peut être un dipôle. Dans la configuration montée, chaque connecteur 62 est placé d'un côté du bord d'attaque 36.

Il est possible de réaliser un élément chauffant parcourant tout le tour du bec. Afin de conserver une efficacité malgré la coupure accidentelle d'un ruban, il est possible de dédoubler chaque ruban. Par exemple, deux rubans associés peuvent former des créneaux en étant imbriqués l'un dans l'autres. Un élément à rubans chauffants peut être placé à l'extérieur de la paroi, et un autre élément à rubans chauffants à l'intérieur de la paroi, c'est-à-dire dans la cavité. Chaque élément est associé à deux strates diélectriques.

## Revendications

1. Bec de séparation (22 ; 122) de compresseur (5) de turbomachine axiale (2), le bec de séparation (22 ; 122) comprenant :
- une surface annulaire de séparation (34) avec un bord d'attaque (36 ; 136) circulaire, la surface (34) étant adaptée pour séparer un flux amont en deux flux annulaires, notamment en un flux primaire (18) et en un flux secondaire (20) ; et
- un dispositif électrique anti givre (44) avec un élément chauffant (46) ; l'élément chauffant (46) comprend au moins un ruban chauffant électrique (48 ; 148) qui est adapté pour s'opposer à la présence de givre sur la surface annulaire (34),
**caractérisé en ce qu'**il comprend un crochet annulaire (40) pour la fixation d'une virole externe ; l'élément chauffant (46), préférentiellement le ou chaque ruban (48), chevauchant axialement le crochet annulaire (40).

2. Bec de séparation (22 ; 122) selon la revendication 1, **caractérisé en ce que** le ou chaque ruban (48 ; 148) traverse radialement le bord d'attaque circulaire (36 ; 136).

3. Bec de séparation (22 ; 122) selon l'une des revendications 1 à 2, **caractérisé en ce qu'**il comprend une zone annulaire chauffée (50) dans laquelle est inscrite le ou chaque ruban (48 ; 148), le ou les rubans (48 ; 148) occupant au moins 10%, préférentiellement au moins 25%, plus préférentiellement la majorité de la zone chauffée (50).

4. Bec de séparation (22 ; 122) selon l'une des revendications 1 à 3, **caractérisé en ce que** le ou chaque ruban (48 ; 148) effectue des demi-tours, préférentiellement au moins cinq demi-tours, plus préférentiellement au moins dix demi-tours.

5. Bec de séparation (22 ; 122) selon l'une des revendications 1 à 4, **caractérisé en ce que** l'élément comprend plusieurs rubans (48 ; 148) et deux connecteurs (62) chacun relié auxdits rubans (48 ; 148), dont un connecteur interne (62) disposé radialement à l'intérieur du bord d'attaque (36 ; 136) et un connecteur externe (62) disposé radialement à l'extérieur du bord d'attaque (36 ; 136).

6. Bec de séparation (22 ; 122) selon l'une des revendications 1 à 5, **caractérisé en ce que** le dispositif anti givre (44) et/ou l'élément chauffant (46) comprend/comprennent plusieurs rubans (48 ; 148) parallèles et/ou se longeant les uns les autres.

7. Bec de séparation (22 ; 122) selon l'une des revendications 1 à 6, **caractérisé en ce qu'**il comprend une couche de matériau diélectrique (56 ; 156) avec deux strates de matériaux diélectriques (58 ; 60 ; 158 ; 160), le ou chaque ruban (48 ; 148) étant disposé à l'interface entre lesdites strates (58 ; 60 ; 158 ; 160).

8. Bec de séparation (22 ; 122) selon la revendication 7, **caractérisé en ce que** les strates (58 ; 60 ; 156 ; 160) comprennent une strate aval (60 ; 160) et une strate amont (58 ; 158) dont la conductivité thermique est supérieure à celle de la strate aval (60 ; 160) ; le ou chaque ruban (48 ; 148) étant inscrit dans l'épaisseur de la strate amont (58 ; 158).

9. Bec de séparation (122) selon l'une des revendications 1 à 8, **caractérisé en ce qu'**il comprend une cavité annulaire et une cloison annulaire (32) séparant la cavité annulaire des flux annulaires (18 ; 20), préférentiellement l'élément chauffant (46), notamment le ou chaque ruban (48 ; 148), est à l'interface entre la cavité et la cloison annulaire (32).

10. Bec de séparation (22 ; 122) selon l'une des revendications 1 à 9, **caractérisé en ce qu'**il comprend une cloison annulaire (32) avec une portion d'épaisseur variable formant un corps annulaire (38 ; 138), le corps (38 ; 138) présentant préférentiellement une épaisseur maximale au niveau du bord d'attaque (36 ; 136), et recevant éventuellement le crochet annulaire (40).

11. Bec de séparation (22 ; 122) selon la revendication 10, **caractérisé en ce que** le corps annulaire (38 ; 138) comporte une marche annulaire externe (52) délimitant axialement l'élément chauffant (46) et éventuellement la couche diélectrique (56 ; 156).

12. Bec de séparation (22 ; 122) selon l'une des revendications 1 à 11, **caractérisé en ce qu'**il comprend un matériau composite à matrice organique, formant notamment la cloison (32).

13. Compresseur (5) de turbomachine axiale (2), notamment basse pression, comprenant un bec de séparation (22 ; 122), **caractérisé en ce que** le bec de séparation (22 ; 122) est conforme à l'une des revendications 1 à 12.

14. Turbomachine (2) comprenant un bec de séparation (22 ; 122), **caractérisée en ce que** le bec de séparation (22 ; 122) est conforme à l'une des revendications 1 à 12, et la turbomachine (2) comprend un compresseur (5) avec un bec de séparation (22 ; 122), le compresseur (5) étant éventuellement conforme à la revendication 13.

## Patentansprüche

1. Trennnase (22; 122) für einen Verdichter (5) einer axialen Turbomaschine (2), wobei die Trennnase (22; 122) umfasst:
eine ringförmige Trennfläche (34) mit einer kreisförmigen Vorderkante (36; 136), wobei die Fläche (34) dafür ausgelegt ist, einen stromaufwärtigen Strom in zwei ringförmige Ströme zu trennen,
spezieller in einen primären Strom (18) und einen sekundären Strom (20); und
eine elektrische Enteisungsvorrichtung (44) mit einem Heizelement (46);
wobei das Heizelement (46) mindestens einen elektrischen Heizstreifen (48; 148) umfasst, der dafür ausgelegt ist, die Bildung von Eis auf der ringförmigen Fläche (34) zu verhindern;
**dadurch gekennzeichnet, dass**:
sie einen ringförmigen Haken (40) zur Befestigung eines äußeren Mantels umfasst, wobei das Heizelement (46), bevorzugt der oder jeder Streifen (48), axial über dem ringförmigen Haken (40) sitzt.

2. Trennnase (22; 122) nach Anspruch 1, **dadurch gekennzeichnet, dass** der oder jeder Streifen (48; 148) die kreisförmige Vorderkante (36; 136) radial schneidet.

3. Trennnase (22; 122) nach einem der Ansprüche 1 und 2, **dadurch gekennzeichnet, dass** sie einen beheizten ringförmigen Bereich (50) umfasst, in den der oder jeder Streifen (48; 148) eingesetzt ist, wobei der oder die Streifen (48; 148) mindestens 10%, bevorzugt mindestens 25%, bevorzugter den Großteil des beheizten Bereichs (50) einnimmt bzw. einnehmen.

4. Trennnase (22; 122) nach einem der Ansprüche 1 bis 3, **dadurch gekennzeichnet, dass** der oder jeder Streifen (48; 148) U-Wendungen ausführt, bevorzugt mindestens fünf U-Wendungen, bevorzugter mindestens zehn U-Wendungen.

5. Trennnase (22; 122) nach einem der Ansprüche 1 bis 4, **dadurch gekennzeichnet, dass** das Element mehrere Streifen (48; 148) und zwei Verbindungsstücke (62), die jedes mit den besagten Streifen (48; 148) verbunden sind, umfasst, d.h. ein inneres Verbindungsstück (62), das radial an der Innenseite der Vorderkante (36, 136) angeordnet ist, und ein äußeres Verbindungsstück (62), das radial an der Außenseite der Vorderkante (36; 136) angeordnet ist.

6. Trennnase (22; 122) nach einem der Ansprüche 1 bis 5, **dadurch gekennzeichnet, dass** die Enteisungsvorrichtung (44) und/oder das Heizelement (46) mehrere Streifen (48; 148) umfasst bzw. umfassen, die parallel sind und/oder sich nebeneinander erstrecken.

7. Trennnase (22; 122) nach einem der Ansprüche 1 bis 6, **dadurch gekennzeichnet, dass** sie eine Schicht von dielektrischem Material (56; 156) mit zwei Lagen von dielektrischem Material (58; 60; 158; 160) umfasst, wobei der oder jeder Streifen (48; 148) an der Schnittstelle zwischen den besagten Lagen (58; 60; 158; 160) angeordnet ist.

8. Trennnase (22; 122) nach Anspruch 7, **dadurch gekennzeichnet, dass** die Lagen (58; 60; 158; 160) eine stromabwärtige Lage (60; 160) und eine stromaufwärtige Lage (58; 158), deren thermische Leitfähigkeit größer als die der stromabwärtigen Lage (60; 160) ist, umfassen, wobei der oder jeder Streifen (48; 148) in die Dicke der stromaufwärtigen Lage (58; 158) eingesetzt ist.

9. Trennnase (122) nach einem der Ansprüche 1 bis 8, **dadurch gekennzeichnet, dass** sie einen ringförmigen Hohlraum und eine ringförmige Trennwand (32), die den ringförmigen Hohlraum von den ringförmigen Strömen (18, 20) trennt, umfasst, wobei bevorzugt das Heizelement (46), insbesondere der oder jeder Streifen (48; 148), sich an der Schnittstelle zwischen dem Hohlraum und der ringförmigen Trennwand (32) befindet.

10. Trennnase (22; 122) nach einem der Ansprüche 1 bis 9, **dadurch gekennzeichnet, dass** sie eine ringförmige Trennwand (32) mit einem Abschnitt von variabler Dicke, der einen ringförmigen Körper (38; 138) bildet, umfasst, wobei der Körper (38; 138) bevorzugt eine maximale Dicke im Bereich der Vorderkante (36; 136) aufweist und gegebenenfalls den ringförmigen Haken (40) aufnimmt.

11. Trennnase (22; 122) nach Anspruch 10, **dadurch gekennzeichnet, dass** der ringförmige Körper (38; 138) eine äußere ringförmige Stufe (52) umfasst, die das Heizelement (46) und gegebenenfalls die dielektrische Schicht (56; 156) axial begrenzt.

12. Trennnase (22; 122) nach einem der Ansprüche 1 bis 11, **dadurch gekennzeichnet, dass** sie einen organisch basierten Verbundwerkstoff umfasst, der insbesondere die Trennwand (32) bildet.

13. Verdichter (5) einer axialen Turbomaschine (2), insbesondere vom Niederdrucktyp, umfassend eine Trennnase (22; 122), **dadurch gekennzeichnet, dass** die Trennnase (22; 122) in Übereinstimmung mit einem der Ansprüche 1 bis 12 ist.

14. Turbomaschine (2), umfassend eine Trennnase (22; 122), **dadurch gekennzeichnet, dass** die Trennnase (22; 122) in Übereinstimmung mit einem der Ansprüche 1 bis 12 ist und die Turbomaschine (2) einen Verdichter (5) mit einer Trennnase (22; 122) umfasst, wobei der Verdichter (5) in Übereinstimmung mit Anspruch 13 sein kann.

## Claims

1. Separation nose (22; 122) for a compressor (5) of an axial turbine engine (2), the separation nose (22; 122) comprising:
- an annular separation surface (34) with a circular leading edge (36; 136), the surface (34) being adapted to separate an upstream flow into two annular flows, in particular into a primary flow (18) and a secondary flow (20); and
- an electrical de-icing device (44) with a heating element (46);
the heating element (46) comprises at least one electric heating strip (48; 148) which is adapted to prevent the formation of ice on the annular surface (34);
**characterized in that**:
it comprises an annular hook (40) for fixing an external shroud, the heating element (46), preferably the or each strip (48), axially straddling the annular hook (40).

2. Separation nose (22; 122) according to Claim 1, **characterized in that** the or each strip (48; 148) crosses radially the circular leading edge (36; 136).

3. Separation nose (22; 122) according to either one of Claims 1 and 2, **characterized in that** it comprises a heated annular zone (50) in which the or each strip (48; 148) is inset, the strip or strips (48; 148) occupying at least 10%, preferably at least 25%, more preferably most of the heated zone (50).

4. Separation nose (22; 122) according to one of Claims 1 to 3, **characterized in that** the or each strip (48; 148) performs U-turns, preferably at least five U-turns, more preferably at least ten U-turns.

5. Separation nose (22; 122) according to one of Claims 1 to 4, **characterized in that** the element comprises several strips (48; 148) and two connectors (62) each connected to the said strips (48; 148), i.e. an internal connector (62) arranged radially on the inside of the leading edge (36, 136) and an external connector (62) arranged radially on the outside of the leading edge (36; 136).

6. Separation nose (22; 122) according to one of Claims 1 to 5, **characterized in that** the de-icing device (44) and/or the heating element (46) comprise(s) several strips (48; 148) which are parallel and/or extend alongside each other.

7. Separation nose (22; 122) according to one of Claims 1 to 6, **characterized in that** it comprises a layer of dielectric material (56; 156) with two strata of dielectric material (58; 60; 158; 160), the or each strip (48; 148) being arranged at the interface between the said strata (58; 60; 158; 160).

8. Separation nose (22; 122) according to Claim 7, **characterized in that** the strata (58; 60; 156; 160) comprise a downstream stratum (60; 160) and an upstream stratum (58; 158), the thermal conductivity of which is greater than that of the downstream stratum (60; 160), the or each strip (48; 148) being inset in the thickness of the upstream stratum (58; 158).

9. Separation nose (122) according to one of Claims 1 to 8, **characterized in that** it comprises an annular cavity and an annular partition (32) separating the annular cavity from the annular flows (18; 20), preferably the heating element (46), in particular the or each strip (48; 148), being at the interface between the cavity and the annular partition (32).

10. Separation nose (22; 122) according to one of Claims 1 to 9, **characterized in that** it comprises an annular partition (32) with a variable-thickness portion forming an annular body (38; 138), the body (38; 138) having preferably a maximum thickness in the region of the leading edge (36; 136) and receiving, where applicable, the annular hook (40).

11. Separation nose (22; 122) according to Claim 10, **characterized in that** the annular body (38; 138) comprises an external annular step (52) delimiting axially the heating element (46) and, where applicable, the dielectric layer (56; 156).

12. Separation nose (22; 122) according to one of Claims 1 to 11, **characterized in that** it comprises an organically based composite material, forming in particular the partition (32).

13. Compressor (5) of an axial turbine engine (2), in particular of the low pressure type, comprising a separation nose (22; 122), **characterized in that** the separation nose (22; 122) is in accordance with one of Claims 1 to 12.

14. Turbine engine (2) comprising a separation nose (22; 122), **characterized in that** the separation nose (22; 122) is in accordance with one of Claims 1 to 12, and the turbine engine (2) comprises a compressor (5) with a separation nose (22; 122), whereby the compressor (5) may be in accordance with Claim 13.
